Europäisches Patentamt

European Patent Office

Office européen des brevets

(11) Veröffentlichungsnummer: **0 486 842 A1**

## EUROPÄISCHE PATENTANMELDUNG

(21) Anmeldenummer: **91118287.1**

(22) Anmeldetag: **26.10.91**

(51) Int. Cl.⁵: **B25D 16/00**, F16D 27/10, B25F 5/00

(30) Priorität: **20.11.90 DE 4036912**

(43) Veröffentlichungstag der Anmeldung:
**27.05.92 Patentblatt 92/22**

(84) Benannte Vertragsstaaten:
**CH DE FR GB IT LI**

(71) Anmelder: **ROBERT BOSCH GMBH**
**Postfach 30 02 20**

**W-7000 Stuttgart 30(DE)**

(72) Erfinder: **Thome, Ludwig, Dr. Dipl.-Ing.**
**Im Mueller 17**
**W-7022 Leinfelden-Echterdingen 3(DE)**
Erfinder: **Hettich, Volker**
**Hutwiesenweg 8**
**W-7022 Leinfelden-Echterdingen(DE)**

(54) **Handwerkzeugmaschine.**

(57) Eine Handwerkzeugmaschine, insbesondere ein Bohrhammer weist in seinem Getriebe zwischen Antriebsmotor (3) und angetriebenem Werkzeug (8) eine Schlingfederkupplung (17, 21, 22) auf, die die Antriebstätigkeit entweder unterbricht oder wieder herstellt, wobei die beiden Kupplungshälften der Schlingfederkupplung (17, 21, 22) asymmetrisch ausgebildet sind. Die Asymmetrie kann sich sowohl auf die Geometrie der Reibflächen (17, 27) der Kupplungsnaben (18, 21) beziehen als auch auf die Form der Schlingfeder (23). Eine derartige Kupplung läßt sich optimal an den jeweiligen Anwendungszweck anpassen. Insbesondere läßt sich wahlweise die Schaltbarkeit erleichtern, der Streubereich des auslösenden Drehmoments vermindern oder die Leistungsdichte verändern. Besonders vorteilhaft ist es, daß übertragbare Drehmoment auf den beiden asymmetrischen Kupplungshälften etwa gleich groß zu wählen.

FIG. 3

## Stand der Technik

Die Erfindung geht aus von einer Handwerkzeugmaschine nach der Gattung des Anspruchs 1. Aus der WO 88/06508 ist bekannt, eine Schlingfederkupplung zur Zuund Abschaltung des Schlagwerks eines Bohrhammers oder als Sicherheitskupplung zum Unterbrechen des Drehantriebs zu verwenden. Derartige Schlingfederkupplungen, wie sie auch aus der DE 37 31 244 bekannt sind, sind herkömmlich symmetrisch mit zwei gleichartigen Kupplungshälften aufgebaut.

## Vorteile der Erfindung

Die erfindungsgemäße Handwerkzeugmaschine gemäß den kennzeichnenden Merkmalen der unabhängigen Ansprüche hat demgegenüber den Vorteil, daß die Kupplung im Sinne einer leichteren Schaltbarkeit, einer Verminderung des Streubereichs des auslösenden Drehmoments oder einer Veränderung der Leistungsdichte an den jeweiligen Anwendungszweck optimal angepaßt werden kann.

Durch die in den abhängigen Ansprüchen aufgeführten Maßnahmen sind vorteilhafte Weiterbildungen und Verbesserungen der in den unabhängigen Ansprüchen angegebenen Handwerkzeugmaschiene möglich. Besonders vorteilhaft ist es, bei gleich großem übertragbarem Drehmoment auf beiden Kupplungshälften unterschiedlich große Umschlingungswinkel der Schlingfeder bei ebenfalls in umgekehrtem Sinne verschieden großem Vorspannmoment zu wählen. Dies führt einerseits auf der Seite mit dem geringen Umschlingungswinkel zu einem geringen Streubereich des übertragbaren Moments und damit zu erhöhter Zuverlässigkeit bei der Auslösung der Kupplung sowie andererseits auf der Seite mit dem großem Umschlingungswinkel aufgrund des geringeren benötigten Vorspannmoments zu einer leichteren Schaltbarkeit der Kupplung.

## Zeichnung

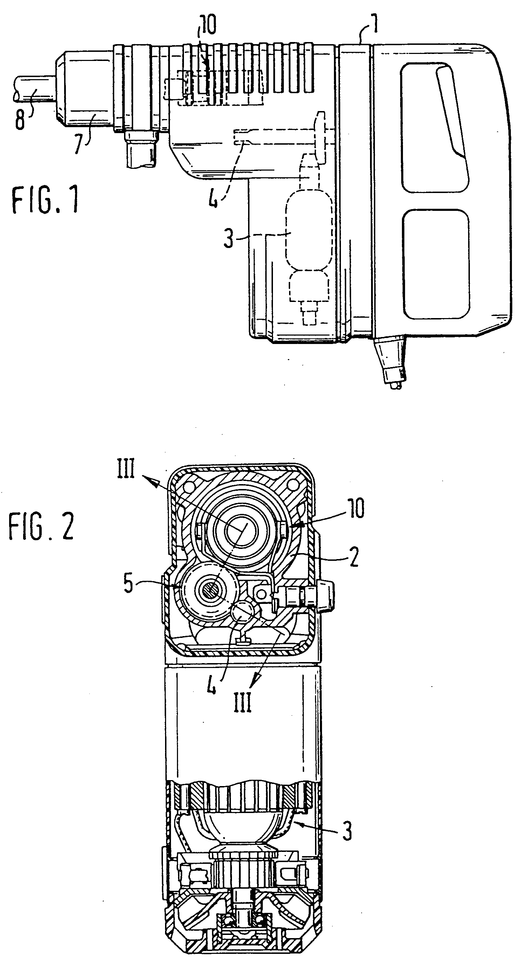

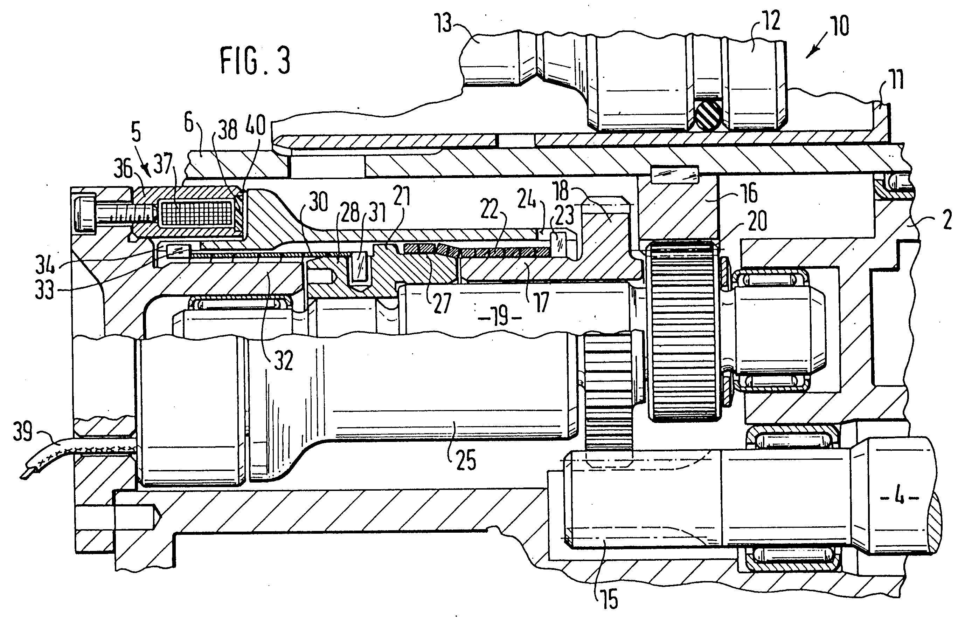

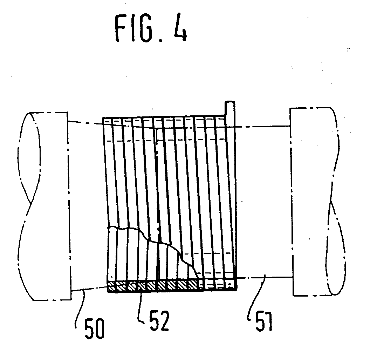

Ein Ausführungsbeispiel der Erfindung ist in der Zeichnung dargestellt und in der nachfolgenden Beschreibung näher erläutert. Figur 1 zeigt eine Gesamtansicht eines Bohrhammers, Figur 2 zeigt einen Querschnitt gemäß Linie II-II in Figur 1 und Figur 3 zeigt einen Teilschnitt gemäß Linie III-III in Figur 2. Figur 4 zeigt ein zweites Ausführungsbeispiel der Erfindung mit einer anderen Kupplungsgeometrie.

## Beschreibung des Ausführungsbeispiels

Eine als Bohrhammer ausgeführte Handwerkzeugmaschine hat ein vorzugsweise aus Kunststoff gefertiges Außengehäuse 1, mit dem ein Gehäuse 2 zur Halterung der inneren Bauteile des Bohrhammers fest verbunden ist. In dem Gehäuse 2 ist ein Elektromotor 3 untergebracht, der in Getriebeverbindung mit einer Zwischenwelle 4 steht. Die Zwischenwelle 4 steht ihrerseits über ein Schaltwerk 5 mit einem Hammerrohr 6 in Getriebeverbindung, auf das ein Werkzeughalter 7 aufgesetzt ist. In den Werkzeughalter 7 ist ein Werkzeug 8 einsetzbar. Weiter ist von der Zwischenwelle 4 ein an sich bekanntes und nicht in allen Einzelheiten gezeigtes Schlagwerk 10 angetrieben. In Figur 3 ist davon ein hin- und hergehend angetriebener Topfkolben 11, ein darin geführter Schläger 12 und ein von dem Schläger 12 beaufschlagter Döpper 13 ersichtlich. Der Döpper 13 übt im Betrieb axiale Schläge auf den Schaft des Werkzeugs 8 aus. Die im Gehäuse wälzgelagerte Zwischenwelle 4 trägt ein Ritzel 15 und dient dem Schaltwerk 5 als Antriebswelle. Als Abtriebswelle dient das Hammerrohr 6, das mit einem Zahnrad 16 drehfest verbunden ist.

Das Schaltwerk 5 weist eine Antriebsnabe 18 auf, die mit dem Ritzel 15 kämmt und eine Reibfläche 17 trägt. Eine Schaltwelle 19 steht mit ihrer Verzahnung 20 in ständigem Eingriff mit dem Zahnrad 16 des Hammerrohrs 6. Die Antriebsnabe 18 ist auf der Schaltwelle 19 frei drehbar. Mit der Schaltwelle 19 ist eine Abtriebsnabe 21 drehfest verbunden. Diese weist eine zylindrische vordere Reibfläche 27 auf, die kürzer ist und einen größeren Außendurchmesser aufweist als die Reibfläche 17 der Antriebsnabe 18. Um die beiden Reibflächen 17 und 27 ist unter Vorspannung eine Schaltfeder 22 geschlungen, die nach dem Prinzip der Seilreibung die beiden Naben 18, 21 kraftschlüssig verbindet. Ihr Windungssinn entspricht der Drehrichtung der Antriebsnabe 18. Ein radial nach außen abstehendes Ende 23 der Schaltfeder 22 greift in eine Aussparung 24 einer die Schaltfeder 22 umgebenden Schalthülse 25 ein, sodaß die Schaltfeder 22 formschlüssig drehfest mit der Schalthülse 25 verbunden ist. Die Antriebsnabe 18, d.h. genauer deren Reibfläche 17 und der sie umschlingende Teil der Schaltfeder 22 bilden eine erste Kupplungshälfte einer als Sicherheitskupplung dienenden Schlingfederkupplung 18, 21, 22 in dem Antriebsstrang zwischen Elektromotor 3 und Werkzeughalter 7. Die zweite Kupplungshälfte der Sicherheitskupplung besteht aus der Abtriebsnabe 21 und dem diese umschlingenden Teil der Schaltfeder 22.

Die Abtriebsnabe 21 hat neben der vorderen Reibfläche 27, an der die Schaltfeder 22 anliegt, eine hintere Reibfläche 28, an der als zweites Beispiel einer asymmetrischen Schlingfederkupplung eine Bremsfeder 30 unter Vorspannung anliegt. Die Bremsfeder 30 ist zusätzlich mit ihrem nach innen in die hintere Reibfläche 28 hineinragenden Ende 31 formschlüssig mit der Abtriebsnabe 21 verbunden. In axialer Verlängerung zu der Abtriebsnabe 21 schließt sich an diese eine Gehäusenabe 32 an. Diese bildet eine Reibfläche mit einem geringeren Außendurchmesser und einer größeren Länge als die hintere Reibfläche 28 aufweist. Die Abtriebsnabe 21 sowie die Schaltwelle 19 sind gegenüber der Gehäusenabe 32 frei drehbar. Die Schaltwelle 19 ist mittels Nadellagern in der Gehäusenabe 32 und dem Gehäuse 2 drehbar gelagert. Die Bremsfeder 30 umgibt die Gehäusenabe 32 ohne Vorspannung und ohne sie zu berühren. Das gehäuseseitige Ende 33 der Bremsfeder 30 greift in eine Aussparung 34 der Schalthülse 25 ein. Die Reibfläche 28 an der Abtriebsnabe 21, die Bremsfeder 30 und die Gehäusenabe 32 bilden zusammen eine zweite asymmetrische Schlingfederkupplung, die schaltbar ist und in nicht gezeigtem geschlossenem Zustand die Schaltwelle 19 und damit das Werkzeug 7 drehfest an das Gehäuse 2 kuppelt.

An der Gehäusenabe 32 ist drehfest eine elektromagnetische Bremse 36 befestigt. Die Bremse 36 weist eine Spule 37 und eine Bremsplatte 38 als Bremsbelag auf. Die Spule 37 kann über Anschlußkabel 39 unter Strom gesetzt werden. Die Bremsplatte 38 liegt mit einem geringen Spalt einer Bremsfläche 40 an der Schalthülse 25 gegenüber. Die Gehäusenabe 32 ist ihrerseits fest mit dem Gehäuse 2 verschraubt. Das gesamte Schaltwerk 5 mit seinen Teilen 18 bis 40 bildet eine Einheit, die patronenartig in das Gehäuse 2 einsetzbar ist und einen Teil des Antriebsstranges zwischen Motor 3 und Werkzeughalter 7 des Bohrhammers 1 bildet.

Die Kupplungen 17, 21, 22 und 21, 30, 32 weisen jeweils asymmetrische Kupplungshälften auf. Das heißt, entweder die beiden Reibflächen einer Kupplung sind geometrisch unterschiedlich und/oder die Schlingfeder weist zwei unterschiedliche Hälften auf. So kann die Schlingfeder mit unterschiedlichem Umschlingungswinkel an den beiden Reibflächen anliegen oder mit unterschiedlicher Vorspannung oder die Federdrahtstärke kann verschieden sein. Schließlich kann der Innendurchmesser der Schlingfeder variiert sein. Die Reibflächen andererseits können sich durch ihre axiale Länge, ihren Durchmesser, ihrer Konizität oder ihren Reibkoeffizienten unterscheiden. Mit einer Optimierung der Reibflächengeometrie läßt sich unter anderem die Leistungsdichte erhöhen.

Die vorgenannten, das übertragbare Drehmoment beeinflussenden Größen der Kupplungshälften können so miteinander kombiniert werden, daß das übertragbare Moment auf beiden Kupplungshälften gleich groß ist. Das von einer Kupplungshälfte übertragbare Moment $M_T$ berechnet sich nach

$$M_T = M_o ( e^{\mu \phi} - 1)$$

mit

$M_o$ = Vorspannmoment der Schlingfeder über einer der Reib flächen in Nm

$\mu$ = Reibungskoeffizient, dimensionslos

$\phi$ = Umschlingungswinkel pro Reibfläche in rad

Bei der Kupplung 17, 22, 27 ist beispielsweise der geringere Umschlingungswinkel auf der Reibfläche 27 durch eine höhere Vorspannung der zugehörigen Schlingfederhälfte kompensiert. Dies hat den Vorteil, daß die Betätigungskraft zum Lösen der Schlingfeder 22 auf der Seite der Antriebsnabe 18 wegen der hohen Windungszahl gering ist. Die Kupplung schaltet dadurch bei reibschlüssiger Betätigung schneller als eine symmetrische Bauform. Die geringe Windungszahl auf der Abtriebsnabe 21 führt andererseits dazu, daß sich die Obergrenze des übertragbaren Moments $M_T$ exakter festlegen läßt. Der Streubereich des übertragbaren Moments bei konstanter Reibwertschwankung ist nämlich umso geringer, je kleiner der Umschlingungswinkel $\phi$ der Schlingfeder 22 ist.

Bei der Kupplung 28, 30, 32 kann deren Baulänge dadurch reduziert werden, daß ein Federende 31 formschlüssig mit der Reibfläche 28 verbunden ist, die auch der Zentrierung der Schlingfeder 30 dient. Diese ist dann nur noch gegenüber der anderen, der Reibfläche der Gehäusenabe 32 drehbar bzw. kann auf ihr rutschen. Im Betrieb des Bohrhammers wird die Zwischenwelle 4 vom Elektromotor 3 ständig drehend angetrieben. Über das Ritzel 15 der Zwischenwelle wird die Drehbewegung auf die Antriebsnabe 18 des Schaltwerks 5 übertragen, die ebenfalls ständig drehend angetrieben ist. Mit der Antriebsnabe 18 ist die Abtriebsnabe 21 über die vorgespannte Schaltfeder 22 kraftschlüssig verbunden. Die Schaltfeder 22 umschlingt unter Vorspannung sowohl die Reibfläche 17 der Antriebsnabe als auch die Reibfläche 27 der Abtriebsnabe 21. Der Windungssinn der Schaltfeder 22 ist so gewählt, daß die Drehung der Antriebsnabe eine Erhöhung des Anpreßdrucks der Feder an die Naben bewirkt. Die Drehbewegung wird von der Abtriebsnabe 21 über die fest mit ihr verbundene Schaltwelle 19 und deren Verzahnung 20 an das Zahnrad 16 des Hammerrohrs 6 übertragen und dient dem drehenden Antrieb des Werkzeugs 8.

Mit den Naben 18, 21 und der Schaltfeder 22 wird auch die Schalthülse 25 dauernd mitgedreht. Ebenfalls dauernd mitgedreht wird die auf die hintere Reibfläche 28 vorgespannte Bremsfeder 30. Während des Normalbetriebs besteht keine Verbindung der Bremsfeder 30 mit der stillstehenden Gehäusenabe 32.

Ein Blockieren des Werkzeug 8 im Werkstück, d.h. ein plötzliches Abbremsen des Werkzeugs und ruckhaftes Beschleunigen des Gehäuses 1,2 wird durch eine nicht näher gezeigte Detektionseinrichtung erkannt. Diese schließt den Stromkreis durch die Spule 37 der elektromagnetischen Bremse 36. Die durch den Elektromagneten 37 bewirkte Anziehung der sich drehenden Schalthülse 25 bewirkt deren Abbremsung. Die Bremsplatte 38 dient bei ihrer Berührung mit der Bremsfläche 40 als Verschleißfläche. Die abgebremste Schalthülse 25 verdreht das Ende 23 der Schaltfeder 22 gegen ihren Windungssinn, sodaß die kraftschlüssige Verbindung der Schaltfeder 22 mit den Naben 18, 21 aufgehoben wird. Gleichzeitig verdreht die Schalthülse 25 die Bremsfeder 30 in Richtung ihres Windungssinns so, daß sich die Bremsfeder 30 kraftschlüssig an die Gehäusenabe 32 anlegt und damit ebenfalls einen weiteren Drehantrieb des Werkzeugs 8 unterbindet. Dadurch wird in kurzer Zeit die mit dem Werkzeug in Verbindung stehende Schaltwelle 19 gegenüber dem Gehäuse 2 stillgesetzt. Dies führt dazu, daß das Gehäuse sich nicht um das Werkzeug 8 herumdrehen kann und der Hand der Bedienungspersonen entgleitet. Der Elektromotor 3 kann währenddessen weiter- beziehungsweise auslaufen und treibt lediglich noch die leerlaufende und sich gegenüber der Schaltwelle 19 drehende Antriebsnabe 18 an.

Bei dem Ausführungsbeispiel nach Figur 4 sind schematisch nur zwei Kupplungsnaben 50, 51 und eine in entspanntem Zustand gezeichnete Schlingfeder 52 gezeigt. Die Nabe 51 ist zylindrisch, die Nabe 50 ist konisch ausgebildet. In montiertem Zustand legt sich die Schlingfeder 52 an die konische Nabe 50 unter erhöhter Vorspannung an. Statt die Nabe 50 konisch auszubilden, kann dieselbe Wirkung auch durch eine konische Ausbildung der Schlingfeder erreicht werden. Die Schlingfeder 52 weist einen konstanten Innendurchmesser auf. Ihr Umschlingungswinkel ist auf der konischen Nabe 50 kleiner als auf der Nabe 51. Die Federdrahtbreite nimmt zur Nabentrennstelle hin zu. Dies hat den Vorteil, daß die Festigkeit der Schlingfeder 52 an der Stelle der größten Beanspruchung am höchsten ist.

**Patentansprüche**

1. Handwerkzeugmaschine, insbesondere Bohrhammer, in deren Getriebe zwischen Antriebsmotor (3) und angetriebenem Werkzeug (8) eine Schlingfederkupplung (17, 21, 22; 21, 30, 32) angeordnet ist, die die Antriebstätigkeit entweder unterbricht oder wiederherstellt, dadurch gekennzeichnet, daß die beiden Kupplungshälften der Schlingfederkupplung (17, 21, 22) asymmetrisch ausgebildet sind.

2. Handwerkzeugmaschine nach einem der Ansprüche 1 bis 4, dadurch gekennzeichnet, daß das übertragbare Drehmoment auf beiden Kupplungshälften zumindest etwa gleich groß ist.

3. Handwerkzeugmaschine nach einem der vorhergehenden Ansprüche, dadurch gekennzeichnet, daß die Schlingfeder (22) bezüglich der Kupplungshälften asymmetrisch ausgebildet ist.

4. Handwerkzeugmaschine nach Anspruch 1, dadurch gekennzeichnet, daß der Umschlingungswinkel der Schlingfeder (22, 30) auf beiden Kupplungshälften unterschiedlich groß ist.

5. Handwerkzeugmaschine nach einem der vorhergehenden Ansprüche, dadurch gekennzeichnet, daß die Reibflächen (17, 28, 50; 27, 32, 51) unterschiedlich große Durchmesser aufweisen.

6. Handwerkzeugmaschine nach einem der Ansprüche 1 bis 3, dadurch gekennzeichnet, daß mindestens eine der Reibflächen (27, 28, 50) und/oder die Form der Schlingfeder in Axialrichtung konisch ausgebildet ist.

7. Handwerkzeugmaschine nach einem der vorhergehenden Ansprüche, dadurch gekennzeichnet, daß die Schlingfeder (22) an ihren den Kupplungshälften zugeordneten Hälften in entspanntem Zustand unterschiedliche Innendurchmesser aufweist.

8. Handwerkzeugmaschine nach einem der vorhergehenden Ansprüche, dadurch gekennzeichnet, daß die Federdrahtstärke und/oder die Federdrahtbreite der Schlingfeder (22, 52) veränderlich ist.

9. Handwerkzeugmaschine nach einem der vorhergehenden Ansprüche, wobei die Schlingfederkupplung (17, 22, 27) in Abhängigkeit von einer gemessenen Größe insbesondere elektromagnetisch betätigt wird, dadurch gekennzeichnet, daß die Schlingfederkupplung (17, 22, 27) als Sicherheitskupplung zum Unterbrechen der Drehantriebstätigkeit bei blockierendem Werkzeug dient.

10. Handwerkzeugmaschine nach einem der vorhergehenden Ansprüche, dadurch gekennzeichnet, daß die Schlingfederkupplung (17, 22, 27) zum wahlweisen Zu- und Abschalten des Drehantriebs dient.

11. Handwerkzeugmaschine nach einem der vorhergehenden Ansprüche, dadurch gekennzeichnet, daß die Schlingfederkupplung (28, 30, 32) zum Koppeln eines blockierten Werkzeugs (8) an das Gehäuse (2) der Handwerkzeugmaschine dient.

FIG. 1

FIG. 2

FIG. 3

EP 0 486 842 A1

## FIG. 4

50  52  51

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-3 228 497 (SCHNEIDER) <br> * Spalte 2, Zeile 36 - Spalte 3, Zeile 59; Abbildung * <br> --- | 1-5,7 | B25D16/00 <br> F16D27/10 <br> B25F5/00 |
| Y | US-A-3 726 372 (BAER ET.AL) <br> * Spalte 6, Zeile 35 - Zeile 59; Abbildungen 10,11 * <br> --- | 1-5,7 | |
| A | PATENT ABSTRACTS OF JAPAN <br> vol. 10, no. 365 (M-542)(2422) 6. Dezember 1986 <br> & JP-A-61 160 633 ( NIPPON ) 27. Juli 1986 <br> * Abbildung * <br> * Zusammenfassung * <br> --- | 1,6 | |
| A | DE-B-1 196 026 (VEB) <br> * Spalte 1, Zeile 10 - Zeile 18 * <br> * Spalte 3, Zeile 66 - Spalte 4, Zeile 46; Ansprüche 1,2; Abbildung 1 * <br> --- | 1,8 | |
| A,D | DE-A-3 731 244 (BOSCH) <br> * Spalte 7, Zeile 39 - Spalte 8, Zeile 18; Abbildungen 1,2 * <br> --- | 1,10 | RECHERCHIERTE SACHGEBIETE (Int. Cl.5) |
| A,D | WO-A-8 806 508 (BOSCH) <br> * Ansprüche 42,43 * <br> --- | 9,11 | B25D <br> B25B <br> B25F |
| A | PATENT ABSTRACTS OF JAPAN <br> vol. 9, no. 11 (M-351)(1734) 18. Januar 1985 <br> & JP-A-59 159 425 ( TOKYO OENKI K.K. ) 10. September 1984 <br> * Abbildung * <br> * Zusammenfassung * <br> ----- | 6 | F16D |

Der vorliegende Recherchenbericht wurde für alle Patentansprüche erstellt

| Recherchenort | Abschlußdatum der Recherche | Prüfer |
|---|---|---|
| DEN HAAG | 11 FEBRUAR 1992 | PETERSSON M. |

EPO FORM 1503 03.82 (P0403)